# FASCICULE DE BREVET EUROPEEN

(11) **EP 0 411 989 B1**
(45) Date de publication et mention de la délivrance du brevet: **21.04.1993**
(21) Numéro de dépôt: 90402120.1
(22) Date de dépôt: 24.07.1990
(51) Int. Cl.: F16L 47/00

(54) **Procédé de raccordement d'une canalisation souple et d'un élément rigide tubulaire**
Verfahren zum Verbinden eines Schlauches und eines starren Rohrelementes
Method of coupling a flexible conduit and a rigid tubular element

(30) Priorité: 01.08.1989 FR 8910850
(43) Date de publication de la demande: 06.02.1991
(73) Titulaire: AUTOMOBILES PEUGEOT, 75116 Paris (FR); AUTOMOBILES CITROEN, 92200 Neuilly-sur-Seine (FR)
(72) Inventeur: Piednoir, Philippe, F-35200 Rennes (FR)
(74) Mandataire: Boivin, Claude

(56) Documents cités:
- DE-U- 8 813 209
- GB-A- 1 437 352

## Description

La présente invention a pour objet un procédé de raccordement d'une canalisation souple dans un élément rigide tubulaire dont le diamètre intérieur est sensiblement égal au diamètre extérieur de la canalisation, dans lequel on prévoit dans l'élément rigide un orifice cylindrique de diamètre sensiblement égal au diamètre extérieur de la canalisation souple, on engage cette canalisation non encore vulcanisée, donc encore à l'état plastique, dans l'élément rigide, on écrase la canalisation entre l'élément rigide et un mandrin sur l'extrémité duquel un insert a été préalablement monté de façon à faire fluer la matière de la canalisation dans une gorge de l'élément rigide, on vulcanise la canalisation souple et on extrait le mandrin.

D'autres caractéristiques du procédé selon l'invention apparaîtront dans la description d'un exemple de mise en oeuvre du procédé selon l'invention donnée ci-après à titre d'exemple non limitatif, avec référence au dessin annexé dans lequel :
La Figure 1 est une vue en coupe axiale montrant une canalisation souple et un élément rigide accordé selon l'invention;
Les Figures 2 à 7 sont des vues en coupe montrant divers stades du procédé.

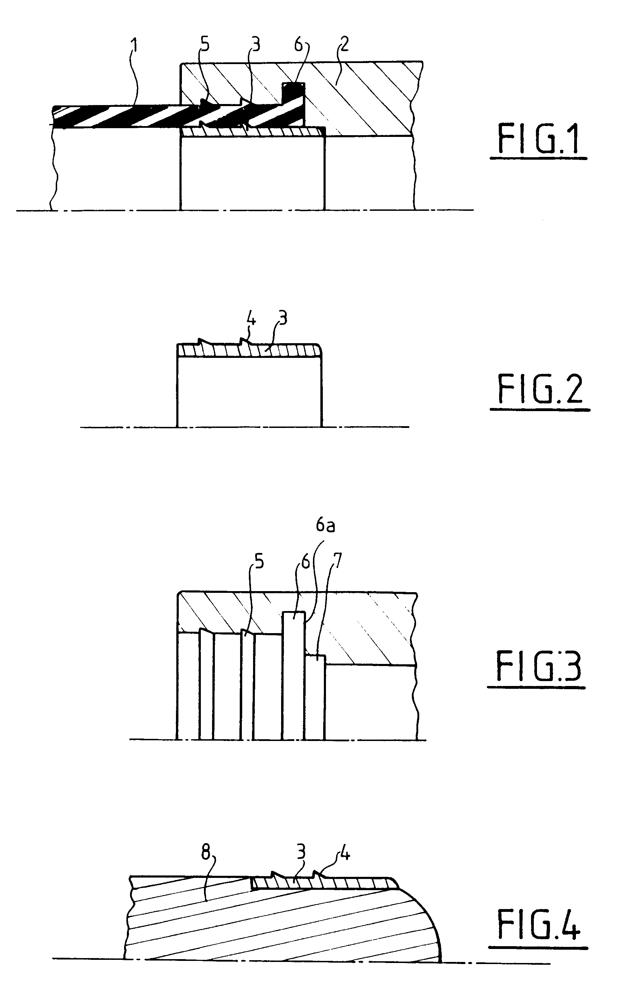

Au dessin, on voit une canalisation souple intérieure 1 et un élément rigide extérieur 2 dont le diamètre intérieur est sensiblement égal au diamètre extérieur de la canalisation. Pour les raccorder, on commence par réaliser un insert 3 qui comporte des stries en saillie 4 et dont le diamètre extérieur est légèrement supérieur au diamètre intérieur de la canalisation 1 non encore vulcanisée, donc encore à l'état plastique (Figure 2). Par ailleurs, on réalise dans l'élément rigide 2 des stries intérieures 5, une gorge 6 terminée par un épaulement 6a et un épaulement 7 de diamètre réduit venus de moulage ou usinés après formation de la pièce 2. (Figure 3).

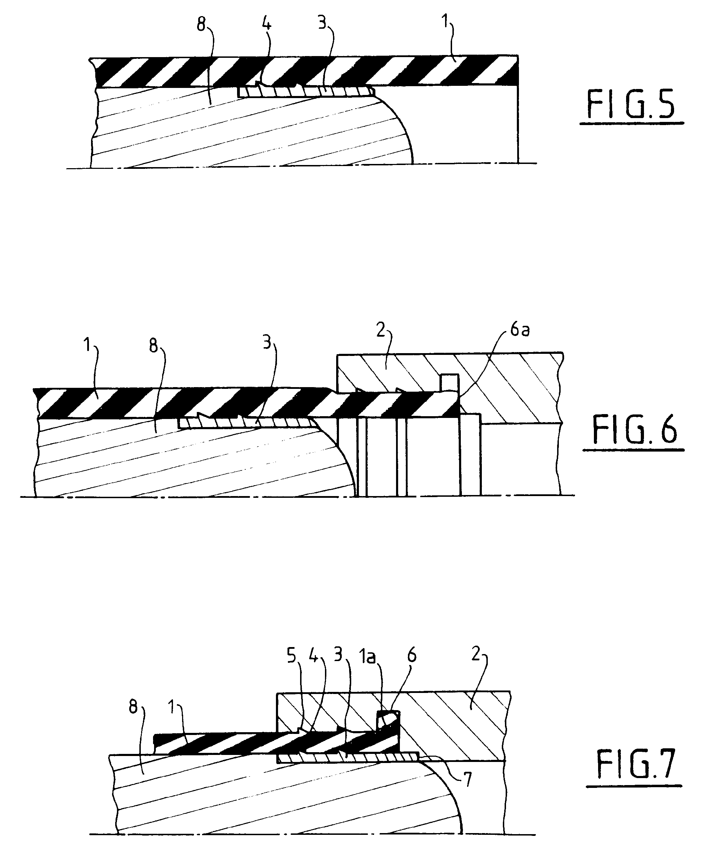

On monte alors l'insert 3 sur l'extrémité d'un mandrin 8, on emmanche l'ensemble dans la canalisation 1 non vulcanisée de façon que l'extrémité de cette canalisation reste libre, (Figure 5), et on met en place l'élément rigide 2 sur cette extrémité libre de façon que cette dernière vienne buter contre l'épaulement 6a (Figure 6).

Il ne reste plus qu'à finir d'emboîter le mandrin 8 dans la canalisation 1 jusqu'à ce que l'insert vienne en butée contre l'épaulement 7; cette canalisation se trouve comprimée entre l'épaulement rigide 2 et l'insert 3. La matière de cette canalisation flue dans la gorge 6 et forme un bourrelet 1a; elle flue également dans les stries 5. Après vulcanisation et extraction du mandrin 8, ce bourrelet et la matière ayant flué dans les stries 5 assurent une excellente tenue à l'arrachement et une bonne étanchéité.

## Revendications

1. Procédé de raccordement d'une canalisation souple et d'un élément rigide,
dans lequel on prévoit dans l'élément rigide (2) un orifice cylindrique de diamètre sensiblement égal au diamètre extérieur de la canalisation souple (1), on engage cette canalisation non encore vulcanisée, donc encore à l'état plastique, dans l'élément rigide (2), on écrase la canalisation (1) entre l'élément rigide (2) et un mandrin (8) sur l'extrémité duquel un insert (3) a été préalablement monté de façon à faire fluer la matière de la canalisation dans une gorge (6) de l'élément rigide, on vulcanise la canalisation souple (1) et on extrait le mandrin.

2. Procédé selon la revendication 1,
caractérisé en ce qu'on prévoit dans l'élément rigide un épaulement interne (7) propre à servir de butée à l'insert (3).

3. Procédé selon la revendication 1 ou 2,
caractérisé en ce que l'insert (3) a un diamètre extérieur supérieur au diamètre intérieur de la canalisation (1) et comporte des stries extérieures (4).

4. Procédé selon l'une des revendications 1 à 3,
caractérisé en ce que l'élément rigide (1) présente des stries internes (5).

5. Procédé selon la revendication 1,
caractérisé en ce qu'on emmanche le mandrin portant l'insert dans la canalisation souple (1) de façon que l'extrémité de cette canalisation reste libre, qu'on engage cette extrémité libre dans l'élément rigide (2), et qu'on poursuit l'enfoncement dans la canalisation (1) du mandrin (8) avec l'insert (3).

## Patentansprüche

1. Verfahren zum Verbinden einer flexiblen Leitung und eines starren Elementes, bei dem man in dem starren Element (2) eine zylindrische Öffnung vorsieht, deren Durchmesser im wesentlichen gleich dem Außendurchmesser der flexiblen Leitung (1) ist, diese noch nicht vulkanisierte und sich deshalb noch im plastischen Zustand befindende Leitung in das starre Element (2) einbringt, die Leitung (1) zwischen das starre Element (2) und einen Dorn (8) einpreßt, auf dessen Ende vorher ein Einsatzstück (3) derart montiert worden ist, daß es das Material der Leitung in eine Nut (6) des starren Elements fließen läßt, die flexible Leitung (1) vulkanisiert und den Dorn herauszieht.

2. Verfahren nach Anspruch 1 dadurch gekennzeichnet, daß man in dem starren Element eine innere Schulter (7) vorsieht die dazu geeignet ist, als Anschlag für das Einsatzstück (3) zu dienen.

3. Verfahren nach Anspruch 1 oder 2 dadurch gekennzeichnet, daß das Einsatzstück (3) einen Außendurchmesser aufweist, der größer ist als der Innendurchmesser der Leitung (1), und äußere Rippen (4) trägt.

4. Verfahren nach einem der Ansprüche 1 bis 3 dadurch gekennzeichnet, daß das starre Element (1) innere Rillen (5) aufweist.

5. Verfahren nach Anspruch 1 dadurch gekennzeichnet, daß man den das Einsatzstück tragenden Dorn in die flexible Leitung (1) derart einsteckt, daß das Ende dieser Leitung frei bleibt, dieses freie Ende in das starre Element (2) einbringt und dann das Eintreiben des Dorns (8) mit dem Einsatzstück (3) in die Leitung (1) fortsetzt.

## Claims

1. Method for connecting a flexible conduit and a rigid element,
wherein a cylindrical orifice with a diameter roughly equal to the external diameter of the flexible conduit (1) is provided inside the rigid element, wherein said conduit, still not vulcanized and thus still in the plastic state, is engaged inside the rigid element (2), wherein the conduit (1) is crushed between the rigid element (2) and a mandrel (8), an insert (3) having firstly been mounted on the extremity of said mandrel so as to make the material of the conduit run into a throat (6) of the rigid element, and wherein the flexible conduit (1) is vulcanized and the mandrel is extracted.

2. Method according to claim 1,
wherein an internal shoulder (7) able to be used as a stop for the insert (3) is provided in the rigid element.

3. Method according to claim 1 or 2,
wherein the insert (3) has a diameter larger than the internal diameter of the conduit (1) and comprises external striae (4).

4. Method according to any one of claims 1 to 3,
wherein the rigid element (1) possesses internal striae (5).

5. Method according to claim 1,
wherein the mandrel bearing the insert is fitted inside the flexible conduit (1) so that the extremity of this conduit remains free, wherein this free extremity is
engaged in the rigid element (2), and wherein the mandrel (8) is then engaged in the conduit (1) along with the insert (3).
